# EUROPEAN PATENT APPLICATION

(11) **EP 4 403 257 A1**
(43) Date of publication of application: **24.07.2024**
(21) Application number: 24152209.3
(22) Date of filing: 16.01.2024
(51) Int. Cl.: B01J 21/04, B01D 53/94, B01J 23/44, B01J 23/46, B01J 23/58, B01J 35/00, B01J 35/40, B01J 35/45, B01J 35/57, B01J 37/02, B01J 37/03

(54) **PALLADIUM FIXING USING GALLIC ACID OR ITS DERIVATIVE**

(30) Priority: 17.01.2023 US 202363480196 P
(71) Applicant: Johnson Matthey Public Limited Company, London EC4A 4AB (GB)
(72) Inventor: HAYASHI, Daijiro, Kitsuregawa, 329-1412 (JP); HOWARD, Michael, Wayne, 19087 (US); LU, Jing, Wayne, 19087 (US); YOKOTA, Daisuke, Kitsuregawa, 329-1412 (JP); ZHENG, Qinghe, Wayne, 19087 (US)
(74) Representative: Boult Wade Tennant LLP

(57) **Abstract**

A method of manufacturing a catalyst article, the method comprising: providing a complex of a compound of formula (I): 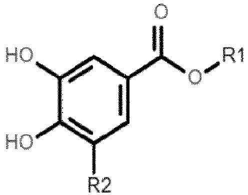 and a PGM, R1 is H or C₁-C₆ alkyl, R2 is H, OH, or O-C₁-C₄ alkyl, the PGM comprising palladium; providing a support material; applying the complex to the support material to form a loaded support material; disposing the loaded support material on a substrate; and heating the loaded support material to form nanoparticles of the PGM on the support material.

## Description

### FIELD OF THE INVENTION

The invention relates to a method of manufacturing a catalyst article, a catalyst article obtainable by the method, an emission treatment system and a method of treating an exhaust gas.

### BACKGROUND OF THE INVENTION

A three-way catalyst (TWC) allows simultaneous conversions (-98%) of CO, HCs and NOₓ from gasoline engine exhaust to innocuous compounds at stoichiometric air-to-fuel ratio. Specifically, the oxidation of CO and HCs to CO₂ and steam (H₂O) is mainly catalyzed by Pd, while the reduction of NOₓ to N₂ is mainly catalyzed by Rh. Modern TWCs use supported platinum group metal (hereinafter "PGM") catalysts (Pd, Rh, Pt, *etc*.) deposited on a single, double or multilayer support, with the support material consisting of metal oxides with high specific surface area, primarily stabilized gamma alumina and ceria-containing oxygen storage materials. The supported catalyst is washcoated on a ceramic monolithic substrate.

Conventional preparation of a TWC washcoat slurry generally involves the use of a solution of an inorganic PGM precursor, e.g. nitrate, acetate, hydroxide or chloride salt, to allow the PGM element to be deposited onto the oxide support via incipient wetness or wet impregnation. Promoter salts are also often added to the washcoat formulations for enhanced TWC performance. Once the monolithic substrate is washcoated with the as-prepared slurry, drying and calcination steps are followed to decompose the inorganic salts and to allow PGM and promoter elements to be fixed onto the support materials. It is known that the performance of supported metal catalysts depends on the structure and composition of the metal nanoparticles, and the nature of the support. Conventional TWCs prepared using the above method often provide only limited control over the structure of the catalytically active species (*i.e.* average PGM particle size and composition, location of the active components, and metal-support interactions). This is mainly due to metal migration and grain growth during high temperature calcination process.

With increasingly stringent environmental regulations, TWCs with higher emissions abatement efficiency are needed. On the other hand, with increasing PGM cost, there is an urgent need of reducing PGM loading without compromising TWC performance. A better control of the PGM particle size and metal-support interaction is essential in optimizing the TWC performance. Furthermore, a uniformed PGM particle size distribution may contribute to a reduction in the extent of metal sintering due to Ostwald Ripening, as often occurs during a fuel cutoff process, an engine strategy used for enhanced fuel economy.

US 2012/0077669 A1 describes a polymer-assisted synthesis of a supported metal catalyst for automotive applications. The polymers used in the examples include poly(vinylpyrrolidone), poly(acrylic acid), and poly(ethyleneimine). In the described synthesis procedures, the support (alumina powder) is first impregnated with a polymer-containing aqueous solution. The impregnated support is then separated from the above solution by filtration and drying steps. The dried impregnated support is further impregnated with a PGM precursor solution by incipient wetness impregnation. The as-described process involves multiple steps for the formation of as-claimed supported metal catalysts, which increases the cost and difficulty for commercial-scale production. US 2012/0077669 A1 indicates that a lean burn engine is preferably used, such as a diesel engine or a lean burn gasoline engine, for the application of the technology.

### SUMMARY OF THE INVENTION

One aspect of the present disclosure is directed to a method of manufacturing a catalyst article, the method comprising: providing a complex of a compound of formula (I): 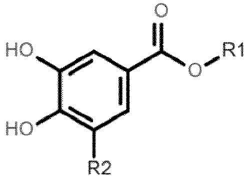 and a PGM, R1 is H or C₁-C₆ alkyl, R2 is H, OH, or O-C₁-C₄ alkyl, the PGM comprising palladium; providing a support material; applying the complex to the support material to form a loaded support material; disposing the loaded support material on a substrate; and heating the loaded support material to form nanoparticles of the PGM on the support material.

Another aspect of the present disclosure is directed to a catalyst article obtainable by the method in the first aspect.

The invention also encompasses an exhaust system for internal combustion engines that comprises the catalyst article in the second aspect.

Another aspect of the present disclosure is directed to a method of treating an exhaust gas, the method comprising: providing the catalyst article of the second aspect; and contacting the catalyst article with an exhaust gas.

### BRIEF DESCRIPTION OF THE DRAWINGS

**FIG. 1** shows Pd uptake on alumina at various pH for Comparative Examples 1A and 1B and Example 1C.
**FIG. 2** shows Pd uptake on CZO at various pH for Comparative Examples 2A and 2B and Example 2C.
**FIG. 3A** shows an SEM imaging mapping of Pd for Comparative Example 3A; **FIG. 3B** shows an SEM mapping image of Pd for Example 3B; **FIG. 3C** shows an SEM mapping image of Pd for Example 3C; and **FIG. 3D** shows an SEM mapping image of Pd for Example 3C.
**FIG. 4** shows quantitative elemental correlation by EPMA for Pd-Al and Pd-Zr of Comparative Example 3A and Examples 3B-3D.
**FIG. 5A** shows NOₓ conversion comparisons during TWC light-off tests among aged Comparative Example 4A and Examples 4B-4D samples; **FIG. 5B** shows CO conversion comparisons during TWC light-off tests among aged Comparative Example 4A and Examples 4B-4D samples; and **FIG. 5C** shows THC conversion comparisons during TWC light-off tests among aged Comparative Example 4A and Examples 4B-4D samples.
**FIG. 6A** shows NOₓ cumulative emissions during engine-bench tests among aged Comparative Example 5A and Example 5B; **FIG. 6B** shows CO cumulative emissions during engine-bench tests among aged Comparative Example 5A and Example 5B; and **FIG. 6C** shows THC cumulative emissions during engine-bench tests among aged Comparative Example 5A and Example 5B.

### DETAILED DESCRIPTION OF THE INVENTION

The present invention seeks to tackle at least some of the problems associated with the prior art or at least to provide a commercially acceptable alternative solution thereto.

In a first aspect, the present invention provides a method of manufacturing a catalyst article, the method comprising:
providing a complex of a compound of formula (I): 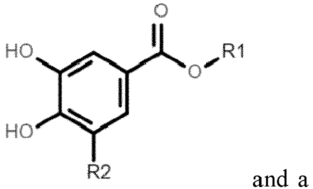 PGM, R1 is H or C₁-C₆ alkyl, R2 is H, OH, or O-C₁-C₄ alkyl, the PGM comprising palladium;
providing a support material;
applying the complex to the support material to form a loaded support material;
disposing the loaded support material on a substrate; and
heating the loaded support material to form nanoparticles of the PGM on the support material.

Each aspect or embodiment as defined herein may be combined with any other aspect(s) or embodiment(s) unless clearly indicated to the contrary. In particular, any features indicated as being preferred or advantageous may be combined with any other feature indicated as being preferred or advantageous.

Surprisingly, when used in an emission treatment system, the catalyst article manufactured by the method of the present invention may exhibit favourable catalytic activity, in particular favourable three-way catalytic activity. For example, the catalyst article may exhibit favourable light-off performance, in particular conversions of NO, CO and total hydrocarbons, during three-way catalytic emissions abatement for a stoichiometric gasoline engine. Such favourable catalytic activity and light-off performance may be superior to that exhibited by conventional catalyst articles with the same/similar PGM specie(s), loading(s), support(s), and configuration(s). The catalyst article may be more durable in comparison to conventional catalyst articles. In other words, such favourable catalytic activity may be exhibited even after aging.

Advantageously, such superior performance may facilitate the use of lower loadings of PGMs in comparison to conventional catalyst articles without compromising catalytic performance. This may be beneficial in view of the high cost of such metals, such as palladium. Furthermore, such superior performance may facilitate the partial/complete substitution of high cost PGMs with lower cost PGMs or other transition metals without compromising catalytic performance.

Moreover, due to the improved fixing of the Pd to the support material that may be provided by the method of the present invention, significantly less wicking of the Pd or washcoat layers through the substrate and/or mixing of the washcoat layers may be observed. In other words, catalyst articles manufactured by the method of the present invention may exhibit stronger/more reliable fixing of the PGMs to the support material compared to catalyst articles manufactured by conventional methods. As well as aesthetic improvements in such catalyst articles, the catalyst articles manufactured by the method of the present invention may therefore exhibit improved catalytic activity. This is at least because mixing of the catalytically-active PGMs between any distinct washcoat layers in the catalyst article may be reduced, which may thereby reduce the likelihood that any of the washcoat layers are deactivated. This, in turn, may help to maintain the catalytic activity of the overall catalyst article as high as intended when the catalyst article is fresh, as well as after ageing. Keeping the PGMs of any distinct washcoat layers within their intended respective layers can be important for maintaining their intended catalytic purpose, whether for oxidation or reduction, for example. For example, it is known that direct interactions between Pd and Rh can reduce the catalytic activity of the individual components, especially the catalytic functions of the Rh component.

Furthermore, depending on the order of the steps and the order of the addition of the support material, the method of the present invention may be used to fix the PGM, for example Pd, to any standard support material. In other words, if there are multiple different support materials in the washcoat, then the method of the present invention may be used to target the PGM, e.g. Pd, to the desired support material by controlling the order of the steps, such as whether the support material is first combined with the PGM precursor or with the complex of a polyphenol and a PGM, for example.

In comparison to the method of US 2012/0077669 A1, the method of the present invention is a simpler and more efficient "one-pot" method, without the need for pH adjustment, for example. The method of the present invention does not require separate impregnation, filtration, and drying steps for depositing the polymer molecules onto the support material. In contrast, in US 2012/0077669 A1, only limited amount of polymers may stay on the support after the filtration and washing steps. Furthermore, the catalyst article prepared by the method of the present invention may be specifically used as a three-way catalyst for stoichiometric gasoline emissions abatement. In contrast, the catalyst article made by the method of US 2012/0077669 A1 has a particular application in lean burn diesel or gasoline engines.

The term "catalyst article" used herein may encompass an article in which a catalyst is supported thereon or therein. The article may take the form of, for example, a honeycomb monolith, or a filter, e.g. a wall flow filter or a flow-through filter. The catalyst article may be for use in an emission treatment system, in particular an emission treatment system for a gasoline engine, preferably a stoichiometric gasoline engine. The catalyst article may be for use in three-way catalysis.

Providing a complex of a compound of formula (I): 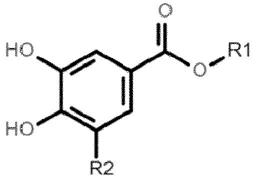 and a PGM typically involves providing the complex in solution, for example an aqueous or alcohol solution. Providing a complex of a compound of formula (I) and a PGM typically involves mixing inorganic PGM precursor(s) and compound of formula (I) in pure or solution form in an aqueous medium, for example mixing PGM nitrate and compound of formula (I) in water.

Preferably, R1 is H. Also preferably, R2 is OH.

The PGM comprises palladium. Palladium may be particularly suitable for carrying out three-way catalysis. In addition, palladium is expensive meaning that it would be advantageous to be able to provide similar levels of catalytic activity for the same amount of metal. Furthermore, the use of palladium in the method of the present invention may result in particularly favourable perturbated light-off performance. The PGM may be in the form of an alloy. In addition to palladium, the PGM may comprise other PGMs such as, for example, one or more of rhodium, platinum, ruthenium, osmium and iridium.

The complex may have a PGM atom to ester group ratio of from 2:1 to 1:10, preferably from 1:1 to 1:8, more preferably from 1:2 to 1:5. The complex may have a palladium atom to ester group ratio of from 2:1 to 1:10, preferably from 1:1 to 1:8, more preferably from 1:2 to 1:5.

The support material may be any material that is capable of supporting the complex and nanoparticles thereon on therein. The support material may take any form, but is typically in the form of a powder, more typically a high surface area powder. The powder maybe further processed with milling with dry or wet milling to achieved desired particle size range. When the method of the present invention is used to prepare a catalysed filter, such as a wall flow filter or flow-through filter, the support material will typically be in the form of a powder in its original, dry-milled, or wet-milled form, and having a D50 of, for example, from 0.1 to 30 µm, more typically from 0.5 to 25 µm as measured using TEM, even more typically 1 to 20 µm. Such particle sizes may facilitate desirable rheological properties of a slurry used to coat the filter. The support material may function as a washcoat. The support material may be a washcoat or may be part of a washcoat.

The support material may also serve as an oxygen storage material, which stores and releases oxygen respectively at fuel lean and fuel rich conditions, for facilitating the three-way catalytic conversion.

Applying the complex to the support material typically involves contacting the complex and support material in the presence of a solvent (typically water) so as to produce a slurry. The term "slurry" as used herein may encompass a liquid comprising insoluble material, e.g. insoluble particles. The slurry may comprise (1) solvent; (2) soluble content, e.g. unreacted compound of formula (I), inorganic PGM and promoter precursor(s), and PGM-compound of formula (I) complex (outside of the support); and (3) insoluble content, e.g. support particles with and without interactions with the compound of formula (I) and metal precursors. The slurry is typically stirred, more typically for at least 10 minutes, more typically for at least 30 minutes, even more typically for at least an hour. Increased contacting and/or stirring times may increase the amount of complex that is loaded onto the support material.

The term "loaded support material" as used herein may encompass a support material that has the PGM-compound of formula (I) complex loaded thereon (*e.g*. on the surface of a high-surface area metal oxide support material) and/or loaded therein (*e.g*. within the pores of a zeolite support material). The complex is typically fixed to the support, for example by electrostatic forces, hydrogen bonds, coordinate bonds, covalent bonds, and/or ionic bonds. For example, in the case of an oxide, ester functional groups (e.g. carboxylate ester functional groups) in the compound of formula (I) and surface hydroxyl groups on the support may interact through electrostatic forces or hydrogen-bond formation.

The term "substrate" as used herein may encompass, for example, a ceramic or metallic honeycomb, or a filter block, *e.g.* a wall flow filter or flow-through filter. The substrate may comprise a ceramic monolithic substrate. The substrate may vary in its material composition, size and configuration, cell shape and density, and wall thickness. Suitable substrates are known in the art.

Disposing the loaded support material on a substrate may be carried out using techniques known in the art. Typically, the loaded support material is disposed on the substrate by pouring a slurry of the loaded support material into the inlet of the substrate using a specific moulding tool in a predetermined amount. As discussed in more detail below, subsequent vacuum and drying steps may be employed during the disposition step. When the support is a filter block, the loaded support material may be disposed on the filter walls, within the filter walls (if porous) or both.

Heating the loaded support material is typically carried out in an oven or furnace, more typically a belt or static oven or furnace, typically in hot air at a specific flow from one direction. The heating may comprise calcination. The heating may also comprise drying. The drying and calcination steps may be continuous or sequential. For example, a separate washcoat may be applied after the substrate is already washcoated and dried with a previous washcoat. A washcoated substrate can also be dried and calcined using one continuous heating program if coating is completed. During the heating, the complex may at least partially, substantially or completely decompose. In other words, the ligands of the complex, i.e. the compound of formula (I), are at least partially, substantially or completely removed or separated from the PGM, and are removed from the final catalyst article. Particles of such separated PGMs may then begin to form metal-metal and metal-oxide bonds. As a result of the heating (calcination), the substrate is typically substantially free of compound of formula (I), more typically completely free of compound of formula (I).

The term "nanoparticle" as used herein may encompass a particle having a diameter of from 0.01 nm to 100 nm as measured by TEM. The nanoparticles may be in any shape, *e.g.* a sphere, a plate, cubic, cylindrical, hexagonal or a rod, but are typically spherical. The largest dimension of the nanoparticle (*i.e.* the diameter if the nanoparticle is spherical), will typically be from 0.5 to 10 nm, more typically from 1 to 5 nm, as measured by TEM.

Following the heating step, the substrate is typically cooled, more typically to room temperature. The cooling is typically carried out in air with or without cooling agent/media, typically without cooling agent.

In some preferred embodiments, the compound of formula (I) is gallic acid:

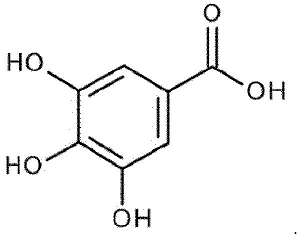

Gallic acid may coordinate with metal ions through hydrogen bonds or covalent bonds. The PGM-gallic acid complex may be fixed onto supports, e.g. metal oxide supports, in a washcoat, where the carboxylate functional group in the gallic acid ligands and surface hydroxyl groups on the support may interact through electrostatic forces or hydrogen-bond formation.

The PGM comprises palladium. Preferably, the PGM consists essentially of, more preferably consists of palladium. Palladium is a particularly expensive PGM and forms particularly suitable complexes with the compound of formula (I), especially gallic acid. The use of such a metal in the method of the present invention may result in particularly favourable perturbated light-off performance. The PGM may comprise predominantly palladium, i.e. at least 50 wt.% palladium, typically at least 80 wt.% palladium, more typically at least 95 wt.% palladium, even more typically at least 99 wt.% palladium based on the total weight of PGM.

After heating the loaded support material the substrate preferably comprises from 10 g/ft³ to 200 g/ft³ of the PGM, more preferably from 30 g/ft³ to 150 g/ft³ of the PGM, and even more preferably from 80 g/ft³ to 150 g/ft³ of the PGM. In other words, the concentration of PGM applied to the substrate via the loaded support material may be such that after heating the loaded support material the substrate comprises from 10 g/ft³ to 200 g/ft³ of the PGM, more preferably from 30 g/ft³ to 150 g/ft³ of the PGM, and even more preferably from 80 g/ft³ to 150 g/ft³ of the PGM. Obtaining such a loading of the PGM on the substrate would be easily achieved by the skilled person by, for example, using either a higher or lower concentration of the complex of the compound of formula (I) and the PGM and/or a higher or lower PGM atom to ester group ratio. In other words, it is well within the skilled person's capabilities to provide a substrate via the method of the present invention with the desired level of PGM loading. For example, from 10 g/ft³ to 200 g/ft³ of the PGM, more preferably from 30 g/ft³ to 150 g/ft³ of the PGM, and even more preferably from 80 g/ft³ to 150 g/ft³ of the PGM may be applied to the support material in the step of applying the complex to the support material to form a loaded support material.

The support material preferably comprises an oxide, preferably one or more of Al₂O₃ (aluminum oxide or alumina), SiO₂, TiO₂, CeO₂, ZrO₂, CeO₂-ZrO₂, V₂O₅, La₂O₃ and zeolites. The oxide is preferably a metal oxide. The support material more preferably comprises alumina, even more preferably gamma-alumina. The support material preferably comprises ceria-zirconia. The support material preferably comprises alumina and ceria-zirconia. The alumina and/or ceria-zirconia is preferably doped, more preferably with an oxide of one or more of lanthanum, neodymium, yttrium, niobium, praseodymium, hafnium, molybdenum, titanium, vanadium, zinc, cadmium, manganese, iron, copper, calcium, barium, strontium, caesium, magnesium, potassium, or sodium; even more preferably with an oxide of lanthanum, neodymium or yttrium. Such doped oxides are particularly effective as support materials. Preferably, the dopant is present in the alumina and/or ceria-zirconia in an amount of from 0.001 wt.% to 20 wt.%, and more preferably from 0.5 wt.% to 10 wt.%.

The support material is preferably in the form of a powder having a D90 of from 0.1 to 25 µm, more preferably from 0.5 to 5 µm.

The loaded support material is preferably disposed onto the substrate in the form of a slurry. A slurry is particularly effective at disposing a material onto a substrate, in particular for maximized gas diffusion and minimized pressure drop during catalytic conversion.

Providing the complex of a compound of formula (I) and a PGM preferably comprises synthesising the complex *in situ* in the slurry.

The slurry is preferably prepared by a method comprising:
contacting a PGM salt and a compound of formula (I) in water to form the complex of a compound of formula (I) and a PGM in an aqueous solution, the PGM salt comprising palladium; and
applying the complex to the support material to form a loaded support material by contacting the support material with the aqueous solution;
optionally adding one or more of an oxygen storage material, preferably ceria-zirconia; a promoter salt; a binder; an acid or a base; a thickening agent; and a reducing agent to the aqueous solution. The optional step of adding one or more of an oxygen storage material, preferably ceria-zirconia; a promoter salt; a binder; an acid or a base; a thickening agent; and a reducing agent to the aqueous solution may be undertaken during any of the steps of said preferred method of preparing the slurry.

In an alternative preferred embodiment, the slurry may be prepared by a method comprising:
contacting a support material and an aqueous solution of a PGM salt to form a slurry comprising a PGM-salt-loaded support material, the PGM salt comprising palladium;
applying the complex of a compound of formula (I) and a PGM to the support material to form a loaded support material by contacting the slurry comprising the PGM-salt-loaded support material and a compound of formula (I) in water;
optionally adding one or more of an oxygen storage material, preferably ceria-zirconia; a promoter salt; a binder; an acid or a base; a thickening agent; and a reducing agent to the aqueous solution or the slurry comprising the PGM-salt-loaded support material. The optional step of adding one or more of an oxygen storage material, preferably ceria-zirconia; a promoter salt; a binder; an acid or a base; a thickening agent; and a reducing agent to the aqueous solution may be undertaken during any of the steps of said preferred method of preparing the slurry, but is preferably performed during the step in which the support material is supplied in each case.

Preferably, the steps of contacting a PGM salt and a compound of formula (I) in water and contacting the slurry comprising the PGM-salt-loaded support material and a compound of formula (I) in water in each alternative method of preparing the slurry comprise allowing sufficient reaction time for complexation to occur between the compound of formula (I) and the PGM cations, for example such steps are typically carried out for at least 10 minutes, more typically for at least 30 minutes, even more typically for at least an hour, preferably with stirring. Without wishing to be bound by theory, it is thought that the step of applying the complex of a compound of formula (I) and a PGM to the support material to form a loaded support material by contacting the slurry comprising the PGM-salt-loaded support material and a compound of formula (I) in water in the second alternative method of preparing the slurry may be followed by subsequent reduction and precipitation of the PGM metal species on the support material.

In other words, the method of preparing the slurry may comprise first providing the complex of a compound of formula (I) and a PGM in an aqueous solution followed by addition of the support and other optional components, or alternatively comprise first adding the support material and other optional components to an aqueous solution of a PGM precursor (i.e. PGM salt) followed by addition of the compound of formula (I).

Such a "one-pot" preparation methods may be simplified and lower cost in comparison to conventional methods. It may also maximize utilization of the compound of formula (I).

In other words, the steps of providing a complex of a compound of formula (I) and a PGM; providing a support material; applying the complex to the support material to form a loaded support material; and disposing the loaded support material on a substrate may comprise:
contacting a PGM salt and a compound of formula (I) in water to form the complex of a compound of formula (I) and a PGM in an aqueous solution, the PGM salt comprising palladium;
adding the support material to the aqueous solution to form a slurry of loaded support material;
optionally adding one or more of an oxygen storage material, preferably ceria-zirconia; a promoter salt; a binder; an acid or a base; a thickening agent; and a reducing agent to the slurry; and
disposing the slurry on the substrate.

Alternatively, the steps of providing a complex of a compound of formula (I) and a PGM; providing a support material; applying the complex to the support material to form a loaded support material; and disposing the loaded support material on a substrate may comprise:
contacting a support material and an aqueous solution of a PGM salt to form a slurry comprising a PGM-salt-loaded support material, the PGM salt comprising palladium;
adding the compound of formula (I) to the slurry comprising the PGM-salt-loaded support material to form a slurry of loaded support material;
optionally adding one or more of an oxygen storage material, preferably ceria-zirconia; a promoter salt; a binder; an acid or a base; a thickening agent; and a reducing agent to the aqueous solution or the slurry comprising the PGM-salt-loaded support material; and
disposing the slurry on the substrate.

The loading may comprise washcoating.

The slurry preferably has a solids content of from 10 to 40 %, preferably from 15 to 35 %. Such a solids content may enable slurry rheologies suitable for disposing the loaded support material onto the substrate. For example, if the substrate is a honeycomb monolith, such solid contents may enable the deposition of a thin layer of washcoat onto the inner walls of the substrate. If the substrate is a wall flow filter, such solids contents may enable the slurry to enter the channels of the wall flow filter and may enable the slurry to enter the walls of the wall flow filter.

Preferably, the slurry further comprises one or more of:
an oxygen storage material, preferably ceria-zirconia;
a promoter salt;
a binder;
an acid or a base;
a thickening agent; and
a reducing agent.

Promotors may include, for example, a non-PGM transition metal element, a rare earth element, an alkali or alkali earth group element, and/or a combination of two or more of the above elements within the same or different groups in periodic table. The promotor salt may be a salt of such elements. A particularly preferred promotor is barium, with particularly preferred salts thereof being barium acetate, barium citrate and barium sulfate, or a combination thereof, more preferably barium citrate.

Binders may include, for example, an oxide material with small particle size to bind the individual insoluble particles together in washcoat slurry. The use of binders in washcoats is well known in the art.

Thickening agents may include, for example, a natural polymer with functional hydroxyl groups that interacts with insoluble particles in washcoat slurry. It serves the purpose of thickening washcoat slurry for the improvement of coating profile during washcoat coating onto substrate. It is usually burned off during washcoat calcination. Examples of specific thickening agents / rheology modifiers for washcoats include glactomanna gum, guar gum, xanthan gum, curdlan schizophyllan, scleroglucan, diutan gum, Whelan gum, hydroxymethyl cellulose, carboxymethyl cellulose, hydroxyethyl cellulose, methyl cellulose, methyl hydroxyethyl cellulose, methyl hydroxypropyl cellulose and ethyl hydroxy cellulose.

The term "reducing agent" as described herein may encompass a compound that can reduce the PGM cations to particles in its reduced state or even metallic state *in situ* during washcoat preparation.

An organic acid can be added that acts as a reductant for PGM and/or creates a reducing environment during the washcoat preparation at ambient temperature or elevated temperature (<100 °C) within certain period of time. Examples of a suitable organic acid may include citric acid, succinic acid, oxalic acid, ascorbic acid, acetic acid, formic acid, tannic acid, and combinations thereof.

In a preferred embodiment, the support material comprises alumina and the slurry further comprises ceria-zirconia. In another preferred embodiment, the support material comprises ceria-zirconia and the slurry further comprises alumina. In another preferred embodiment, the support material comprises alumina and ceria-zirconia.

The method preferably further comprises disposing a further slurry on the substrate, the further slurry comprising one or more of a further support material; an oxygen storage material; a promoter salt; a binder; an acid or a base; a thickening agent; and a reducing agent, wherein disposing the further slurry on the substrate takes place before disposing the support material on the substrate and/or after heating the loaded support material to form nanoparticles of the PGM on the support material. This may result in a catalyst article having multiple layers of different washcoats, for example a bottom washcoat containing, *inter alia,* palladium nanoparticles supported on alumina, and a top washcoat containing, *inter alia,* palladium nanoparticles supported on alumina. Further examples of such multiple layers are discussed in more detail below.

Disposing the loaded support material on a substrate preferably comprises contacting the slurry with the substrate (e.g. pouring the slurry into an inlet of the substrate) and optionally:
applying a vacuum to the substrate, and/or
drying the slurry on the substrate.

This may result in a favourable distribution of the loaded support material on the substrate.

The drying preferably occurs:
at a temperature of from 60 °C to 200 °C, more preferably from 70 °C to 130 °C; and/or
for from 10 to 360 minutes, preferably from 15 to 60 minutes.

The substrate may be a "blank", *i.e*. un-washcoated, substrate. Alternatively, the substrate may have one or washcoats already loaded thereon. In such a situation, the final catalyst article may comprise multiple layers of different washcoats.

The substrate preferably comprises cordierite. Cordierite substrates are particularly suitable for use in catalyst articles.

The substrate is preferably in the form of a honeycomb monolith, a wall flow filter or a flow through filter.

The heating is preferably carried out:
at a temperature of from 400 °C to 700 °C, preferably from 400 °C to 600 °C, more preferably from 450 °C to 600 °C; and/or
for from 10 to 360 minutes, preferably from 35 to 120 minutes.

Lower temperatures and/or shorter heating times may result in insufficient decomposition of the complex and/or may result in high levels of compound of formula (I) remaining in the substrate. Higher temperatures and/or longer heating times may lead to the particles of PGM having an unfavourably large particle size, presumably due to sintering. Higher temperatures and longer heating times may also lead to damage to the catalyst article.

The heating preferably comprises calcining. The term "calcining" as used herein may encompass a thermal treatment process in the absence of, or limited supply of, air or oxygen to bring about a thermal decomposition.

The nanoparticles preferably have a D50 of from 0.1 nm to 30 nm, more preferably from 0.5 to 25 nm, even more preferably from 1 to 20 nm. The D50 may be measured by TEM. Such particle sizes may result in a favourable level of catalytic activity.

In a further aspect, the present invention provides a catalyst article obtainable by the method described herein, the catalyst article for use in an emission treatment system.

In comparison to conventional catalyst article, the catalyst article obtainable by the method described herein may contain PGM particles having favourably larger particle sizes and a favourable particle size distribution (*e.g*. a D50 of from 1 to 20 nm) in their fresh state. In addition, in comparison to conventional catalyst articles, the catalyst article obtainable by the method described herein may exhibit a more uniformed dispersion of PGM particles throughout the substrate.

When used in an emission treatment system, the catalyst article may exhibit favourable light-off performance, in particular for NO, CO and total hydrocarbons during three-way catalytic conversions for stoichiometric gasoline emissions abatement. The catalyst article may also exhibit the other favourable properties described herein, such as a lower fresh OSC capacity, and less fresh-to-aged OSC difference (in another word more stable OSC performance towards aging).

The catalyst is preferably for three-way catalysis.

The catalyst article may have a washcoat loading of from 1 g/in³ to 3 g/in³. Such a catalyst article may exhibit similar or higher catalytic activity in comparison to conventional catalyst articles but may be lower cost in view of the lower levels of PGM employed.

The substrate preferably comprises a wall flow filter substrate or a flow-through substrate.

In a preferred embodiment, the catalyst article comprises a bottom layer of support material having rhodium thereon and a top layer of support material having palladium thereon. In such a catalyst article, for example, the bottom layer may be provided by a method similar to that described herein or by any conventional method. In another preferred embodiment, the catalyst article comprises a bottom layer of support material having palladium thereon and a top layer of support material having rhodium thereon. In such a catalyst article, for example, the top layer may be provided by a method similar to that described herein or by any conventional method. The term "bottom layer" as used herein may encompass a layer (*e.g.* washcoat layer) that is closest to or in contact with the substrate (*i.e.* substrate walls). The term "top layer" as used herein may encompass a layer (*e.g.* a washcoat layer) that is more remote from the substrate (*i.e.* substrate walls) than the bottom layer, and may be situated on top of the bottom layer. In such layered catalyst articles, the top and/or bottom layer of support material may have a further PGM thereon, for example platinum. In such layered catalyst articles, the top and/or bottom layer may comprise multiple PGMs, i.e. may be bimetallic (e.g. contain Pd-Rh or Pd-Pt) or trimetallic (e.g. Pd-Rh-Pt). The catalyst article may comprise two or more catalyst zones, for example an upstream zone and a downstream zone. The zones may differ from each other by having different PGMs (e.g. Rh upstream and Pd downstream or vice versa) or differing by the amount of different type PGMs e.g. monometallic, bimetallic or trimetallic.

In such preferred embodiments, the support material preferably comprises alumina and ceria-zirconia.

The catalyst article, in particular in such preferred embodiments, preferably comprises from 2 g/ft³ to 15 g/ft³ rhodium, more preferably from 5 g/ft³ to 10 g/ft³ rhodium. Advantageously, such rhodium levels may be lower than those of conventional catalyst articles but without compromising catalytic activity.

The catalyst article, in particular in such preferred embodiments, preferably comprises from 50 g/ft³ to 200 g/ft³ palladium, more preferably from 80 g/ft³ to 150 g/ft³ palladium. Advantageously, such palladium levels may be lower than those of conventional catalyst articles but without compromising catalytic activity.

In a preferred embodiment, the loaded support material is disposed on the substrate in the form of a slurry, the PGM comprises palladium, the support material comprises alumina and the slurry further comprises ceria-zirconia. In another preferred embodiment, the loaded support material is disposed on the substrate in the form of a slurry, the PGM comprises palladium, the support material comprises ceria-zirconia and the slurry further comprises alumina. In another preferred embodiment, the loaded support material is disposed on the substrate in the form of a slurry, the PGM comprises palladium and the support material comprises alumina and ceria-zirconia.

In a further aspect, the present invention provides an emission treatment system comprising the catalyst article described herein.

The emission treatment system is preferably for a gasoline engine.

The gasoline engine preferably operates under stoichiometric conditions.

In a further aspect, the present invention provides a method of treating an exhaust gas, the method comprising:
providing the catalyst article described herein; and
contacting the catalyst article with an exhaust gas.

The exhaust gas is preferably an exhaust gas from a gasoline engine. The catalyst article is particularly suitable for treating such exhaust gas. The gasoline engine preferably operates under stoichiometric conditions.

The invention will now be described in relation to the following non-limiting examples.

### Pd Uptake Testing

### Comparative Example 1A: Pd uptake on alumina at various pH (2, 4, 6, 8, &10)

1. Add required amount of Pd nitrate, water and alumina targeting 3.75wt% Pd on alumina and 30% solids. Mix for 1 hour.
2. Measure pH, adjust to target pH using ammonium hydroxide. Mix for 1 hour.
3. Centrifuge and collect the supernatant.
4. Submit the supernatant sample for ICP analysis of Pd concentration.

### Comparative Example 1B: Pd uptake on alumina at various pH (2, 4, 6, 8, &10) with tannic acid

1. Add required amount of Pd nitrate, water and alumina targeting 3.75wt% Pd on alumina and 30% solids. Mix for 1 hour.
2. Add tannic acid, targeting TA : Pd mass ratio of 2 : 1; mix for 2 hours
3. Measure pH, adjust to target pH using ammonium hydroxide. Mix for 1 hour.
4. Centrifuge and collect the supernatant.
5. Submit the supernatant sample for ICP analysis of Pd concentration.

### Example 1C: Pd uptake on alumina at various pH (2, 4, 6, 8, &10) with gallic acid

1. Add required amount of Pd nitrate, water and alumina targeting 3.75wt% Pd on alumina and 30% solids. Mix for 1 hour.
2. Add Gallic acid, targeting GA : Pd mass ratio of 2 : 1; mix for 2 hours
3. Measure pH, adjust to target pH using ammonium hydroxide. Mix for 1 hour.
4. Centrifuge and collect the supernatant.
5. Submit the supernatant sample for ICP analysis of Pd concentration.

### Comparative Example 2A: Pd uptake on CZO at various pH (2, 4, 6, 8, &10)

1. Add required amount of Pd nitrate, water and CZO targeting 3.75wt% Pd on CZO and 30% solids. Mix for 1 hour.
2. Measure pH, adjust to target pH using ammonium hydroxide. Mix for 1 hour.
3. Centrifuge and collect the supernatant.
4. Submit the supernatant sample for ICP analysis of Pd concentration.

### Comparative Example 2B: Pd uptake on CZO at various pH (2, 4, 6, 8, &10) with tannic acid

1. Add required amount of Pd nitrate, water and CZO targeting 3.75wt% Pd on CZO and 30% solids. Mix for 1 hour.
2. Add tannic acid, targeting TA : Pd mass ratio of 2 : 1; mix for 2 hours
3. Measure pH, adjust to target pH using ammonium hydroxide. Mix for 1 hour.
4. Centrifuge and collect the supernatant.
5. Submit the supernatant sample for ICP analysis of Pd concentration.

### Example 2C: Pd uptake on CZO at various pH (2, 4, 6, 8, &10) with gallic acid

1. Add required amount of Pd nitrate, water and CZO targeting 3.75wt% Pd on CZO and 30% solids. Mix for 1 hour.
2. Add Gallic acid, targeting GA : Pd mass ratio of 2 : 1; mix for 2 hours
3. Measure pH, adjust to target pH using ammonium hydroxide. Mix for 1 hour.
4. Centrifuge and collect the supernatant.
5. Submit the supernatant sample for ICP analysis of Pd concentration.

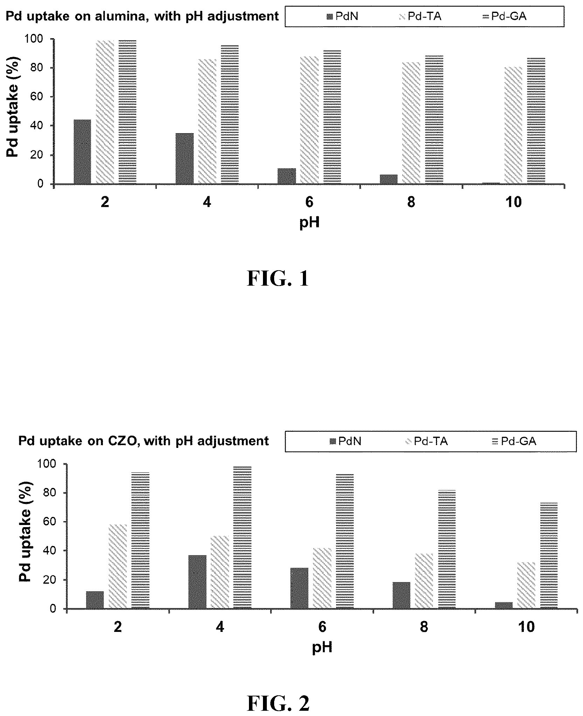

These Pd update results on alumina or CZO are shown in **FIG. 1** and **FIG. 2****.** Although both tannic acid and gallic acid improved Pd fixing significantly, the effectiveness of tannic acid is much lower on CZO support, especially at higher pH conditions. In contrast, gallic acid is much more effective in fixing Pd regardless of support and pH conditions.

### Pd Partitioning Testing

### Comparative Example 3A: Fully formulated single layer Pd washcoat without Pd fixing

1. Prepare a solution with required amount of Pd nitrate (with Pd loading 130 g/ft³).
2. Add stabilized alumina (1 g/in³) and CZO (1 g/in³) to the batch.
3. Add Ba acetate (400 g/ft³) to the batch.
4. Adjust solids to target (suggest -30%)
5. Add appropriate amount of thickening agent, mix overnight
6. Coat single dose target 1.2 inch from inlet
7. Fire the brick at 500 °C/30 min in a static oven.

### Example 3B: Fully formulated single layer Pd washcoat with Pd fixed by gallic acid in the presence of both alumina and CZO

1. Prepare a solution with required amount of Pd nitrate (with Pd loading 130 g/ft³).
2. Add stabilized alumina (1 g/in³) and CZO (1 g/in³) to the batch.
3. Add gallic acid, targeting GA : Pd mass ratio of 2.
4. Add Ba acetate (400 g/ft³) to the batch.
5. Adjust solids to target (suggest -30%)
6. Add appropriate amount of thickening agent, Mix overnight
7. Coat single dose target 1.2 inch from inlet
8. Fire the brick at 500 °C/30 min in a static oven.

### Example 3C: Fully formulated single layer Pd washcoat with Pd fixed by GA on alumina before CZO addition

1. Prepare a solution with required amount of Pd nitrate (with Pd loading 130 g/ft³).
2. Add stabilized alumina (1 g/in³) to the batch.
3. Add gallic acid, targeting GA : Pd mass ratio of 2.
4. Add CZO (1 g/in³) to the batch.
5. Add Ba acetate (400 g/ft³) to the batch.
6. Adjust solids to target (suggest -30%)
7. Add appropriate amount of thickening agent, Mix overnight
8. Coat single dose target 1.2 inch from inlet
9. Fire the brick at 500 °C/30 min in a static oven.

### Example 3D: Fully formulated single layer Pd washcoat with Pd fixed by GA on CZO before alumina addition

1. Prepare a solution with required amount of Pd nitrate (with Pd loading 130 g/ft³).
2. Add CZO (1 g/in³) to the batch.
3. Add gallic acid, targeting GA : Pd mass ratio of 2.
4. Add stabilized alumina (1 g/in³) to the batch.
5. Add Ba acetate (400 g/ft³) to the batch.
6. Adjust solids to target (suggest -30%)
7. Add appropriate amount of thickening agent, Mix overnight
8. Coat single dose target 1.2 inch from inlet
9. Fire the brick at 500 °C/30 min in a static oven.

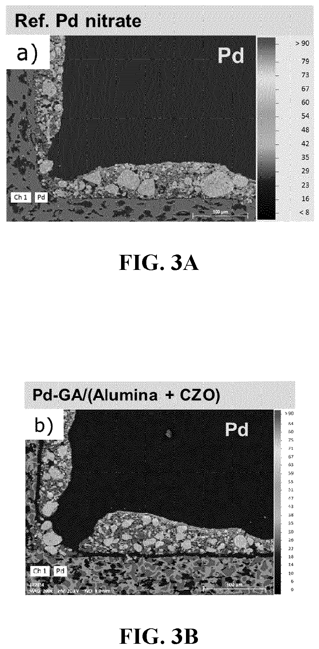

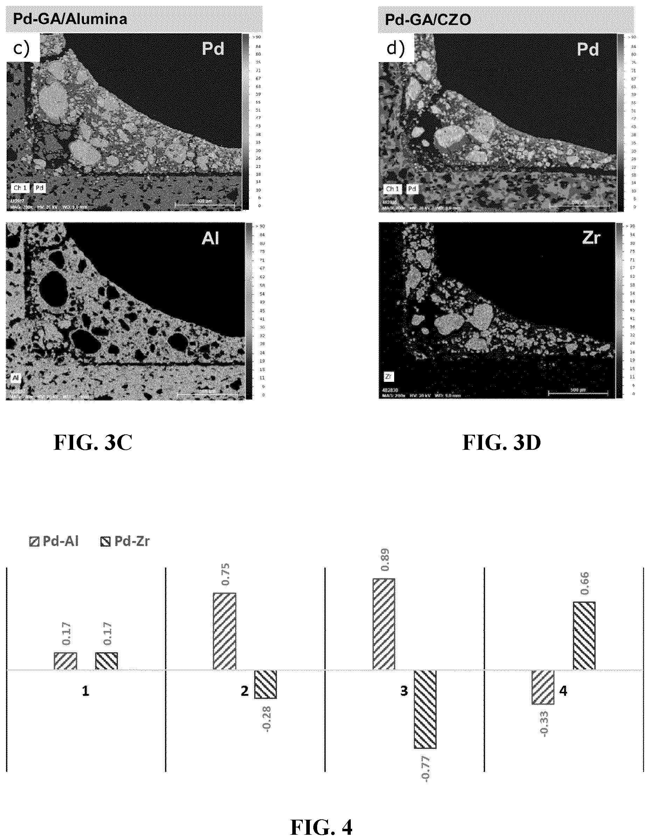

**FIGs. 3A-3D** showed SEM (Scanning Electron Microscopy) mapping of Pd in Pd-TWC single layer washcoat in Comparative Example 3A and Examples 3B-3D. Comparing **FIG. 3A** and **FIG. 3B****,** it clearly demonstrates that Pd is concentrated on the surface of the washcoat in the reference catalyst, whereas Pd is distributed much more uniformly through the washcoat layer when gallic acid is added. Therefore, gallic acid helped fixing of Pd in the washcoat. **FIG. 3C** and **FIG. 3D** showed the elemental mapping of Pd vs. Al or Pd vs. Zr in the same washcoat sample; where it shows Pd is fixed on either alumina or CZO by adding gallic acid and controlling the order of addition during washcoat preparation.

### EPMA ANALYSIS

Comparative Example 3A and Examples 3B-3D have been analysed by EPMA for the quantitative analysis of proximity between elements. A higher/positive correlation number indicates a higher statistical possibility for the two elements to be in close proximity; and a lower/negative correlation number indicates a lower statistical possibility for the two elements to be in close proximity. Thus, the relative amount of Pd on alumina vs. CZO supports can be determined by analyzing Pd-Al and Pd-Zr correlation using this method. And the analyses are shown in **FIG. 4****.**

The results suggest Pd is equally distributed on alumina and CZO in Comparative Example 3A. And Pd is preferentially adsorbed onto alumina when fixed by gallic acid, likely due to the higher surface area and pore volume on alumina vs. CZO. However, by changing orders of addition, Pd can be selectively fixed on either alumina or CZO by using gallic acid.

### CATALYST LIGHT-OFF PERFORMANCE

### Comparative Example 4A: Fully formulated single layer Pd washcoat without Pd fixing

1. Prepare a solution with required amount of Pd nitrate (with Pd loading 100 g/ft³).
2. Add stabilized alumina (1 g/in³) and CZO (1 g/in³) to the batch.
3. Add Ba acetate (300 g/ft³) to the batch.
4. Adjust solids to target (suggest -30%)
5. Add appropriate amount of thickening agent, mix overnight
6. Coat single dose target 1.2 inch from inlet
7. Fire the brick at 500 °C/30 min in a static oven.

### Example 4B: Fully formulated single layer Pd washcoat with Pd-GA (GA-to-Pd mass ratio of 1.3)

1. Prepare a solution with required amount of Pd nitrate (with Pd loading 100 g/ft³).
2. Add stabilized alumina (1 g/in³) and CZO (1 g/in³) to the batch.
3. Add gallic acid, targeting GA : Pd mass ratio of 1.3.
4. Add Ba acetate (300 g/ft³) to the batch.
5. Adjust solids to target (suggest -30%)
6. Add appropriate amount of thickening agent, mix overnight
7. Coat single dose target 1.2 inch from inlet
8. Fire the brick at 500 °C/30 min in a static oven.

### Example 4C: Fully formulated single layer Pd washcoat with Pd-GA×1.5 (GA-to-Pd mass ratio of 2)

1. Prepare a solution with required amount of Pd nitrate (with Pd loading 100 g/ft³).
2. Add stabilized alumina (1 g/in³) and CZO (1 g/in³) to the batch.
3. Add gallic acid, targeting GA : Pd mass ratio of 2.0.
4. Add Ba acetate (300 g/ft³) to the batch.
5. Adjust solids to target (suggest -30%)
6. Add appropriate amount of thickening agent, mix overnight
7. Coat single dose target 1.2 inch from inlet
8. Fire the brick at 500 °C/30 min in a static oven.

### Example 4D: Fully formulated single layer Pd washcoat with Pd-GA×2.0 (GA-to-Pd mass ratio of 2.7)

1. Prepare a solution with required amount of Pd nitrate (with Pd loading 100 g/ft³).
2. Add stabilized alumina (1 g/in³) and CZO (1 g/in³) to the batch.
3. Add gallic acid, targeting GA : Pd mass ratio of 2.7.
4. Add Ba acetate (300 g/ft³) to the batch.
5. Adjust solids to target (suggest -30%)
6. Add appropriate amount of thickening agent, mix overnight
7. Coat single dose target 1.2 inch from inlet
8. Fire the brick at 500 °C/30 min in a static oven.

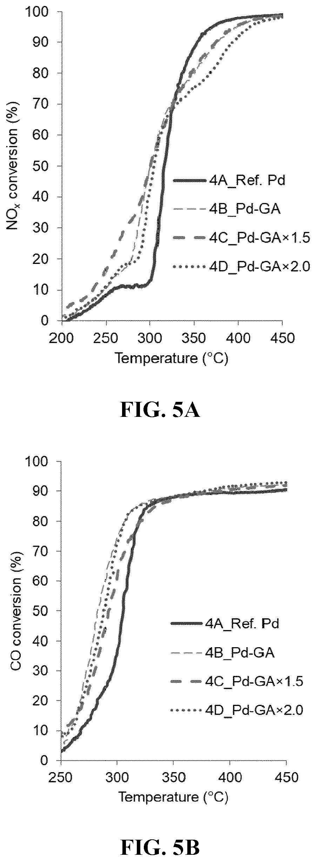

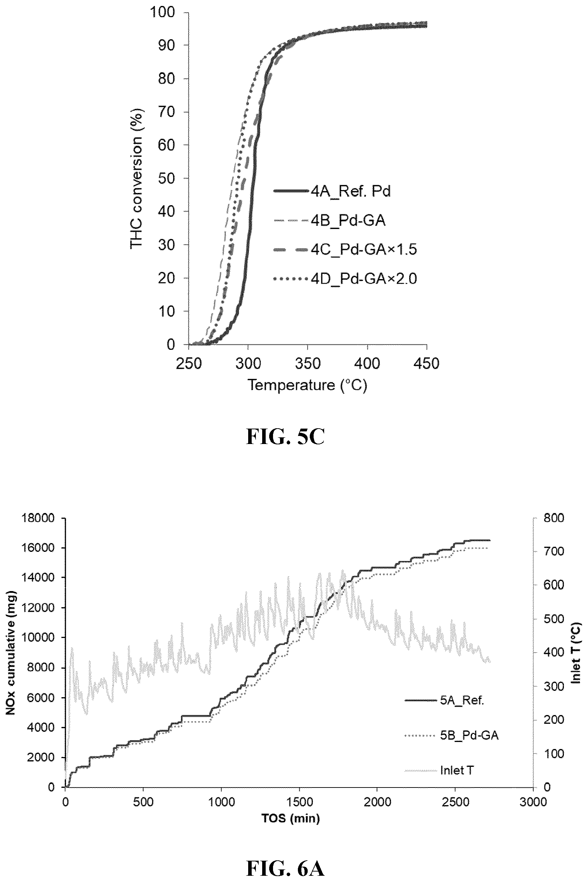

**FIGs. 5A, 5B****, and** **5C** respectively showed the NOₓ, CO, and THC light-off conversion comparison among Comparative Example 4A and Examples 4B, 4C, and 4D, after redox aging at 1000 °C for 40 hrs. The catalysts were evaluated after rich pre-treatment, and at light-off temperature between 150-600 °C, at perturbated *λ* between 0.96~1.04 (with a frequency of 1 Hz), and GHSV of 200,000 hr⁻¹. Compared to fully formulated Pd reference catalyst without fixing (Comparative Example 4A), Pd catalysts with fixing by Gallic acid at different amounts (Examples 4B-4D, at GA-to-Pd mass ratio of 1.3, 2.0, and 2.7 respectively), showed improved low-temperature NOₓ light-off performance, and improved CO and THC performance.

### CATALYST ENGINE PERFORMANCE

### Comparative Example 5A: Fully formulated single layer Pd washcoat without Pd fixing

1. Prepare a solution with required amount of Pd nitrate (with Pd loading 149 g/ft³).
2. Add stabilized alumina (1 g/in³) and CZO (1 g/in³) to the batch.
3. Add Ba acetate (400 g/ft³) to the batch.
4. Adjust solids to target (suggest -30%).
5. Add appropriate amount of thickening agent, mix overnight.
6. Coat 50% dose length from inlet, dry with air cure.
7. Then coat 50% dose length from outlet, dry with air cure to obtain bottom-layer coated part.
8. Prepare a solution of required amount of Rh nitrate (with Rh loading 6 g/ft³).
9. Add stabilized alumina (1 g/in³) to the above solution.
10. Adjust pH of 6-7 to the above mixture and mix for at least 1 hr.
11. Add CZO (1 g/in³) to the above mixture.
12. Add appropriate amount of thickening agent to the above mixture and stir overnight.
13. Coat 50% dose length from inlet of the coated part from Step 7, dry with air cure.
14. Then coat 50% dose length from outlet, dry with air cure to obtain double-layer coated part.
15. Fire the brick at 500 °C/30 min in a static oven.

### Example 5B: Fully formulated single layer Pd washcoat with Pd fixing by Gallic acid

1. Prepare a solution with required amount of Pd nitrate (with Pd loading 149 g/ft³).
2. Add stabilized alumina (1 g/in³) and CZO (1 g/in³) to the batch.
3. Add gallic acid, targeting GA : Pd mass ratio of 2.0.
4. Add Ba acetate (400 g/ft³) to the batch.
5. Adjust solids to target (suggest -30%).
6. Add appropriate amount of thickening agent, mix overnight.
7. Coat 50% dose length from inlet, dry with air cure.
8. Then coat 50% dose length from outlet, dry with air cure to obtain bottom-layer coated part.
9. Prepare a solution of required amount of Rh nitrate (with Rh loading 6 g/ft³).
10. Add stabilized alumina (1 g/in³) to the above solution.
11. Adjust pH of 6-7 to the above mixture and mix for at least 1 hr.
12. Add CZO (1 g/in³) to the above mixture.
13. Add appropriate amount of thickening agent to the above mixture and stir overnight.
14. Coat 50% dose length from inlet of the coated part from Step 8, dry with air cure.
15. Then coat 50% dose length from outlet, dry with air cure to obtain double-layer coated part.
16. Fire the brick at 500 °C/30 min in a static oven.

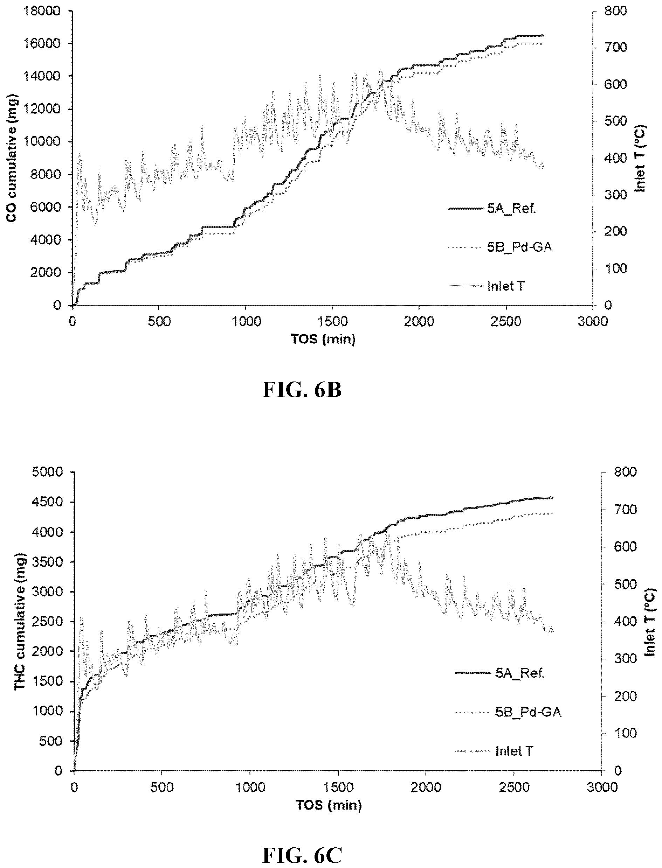

**FIGs. 6A****,** **6B, and 6C** respectively showed the NOₓ, CO, and THC emissions during engine-bench testing of Comparative Example 5A and Example 5B, after engine-redox aging at 950 °C for 50 hrs. Compared to fully formulated Pd-Rh double layer catalyst without Pd fixing (Comparative Example 5A), Example 5B showed improved TWC performance with less NOₓ, CO, and THC emissions.

The foregoing detailed description has been provided by way of explanation and illustration, and is not intended to limit the scope of the appended claims. Many variations in the presently preferred embodiments illustrated herein will be apparent to one of ordinary skill in the art and remain within the scope of the appended claims and their equivalents.

## Claims

1. A method of manufacturing a catalyst article, the method comprising:
providing a complex of a compound of formula (I): 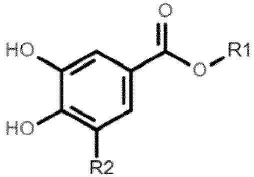 and a PGM, R1 is H or C₁-C₆ alkyl, R2 is H, OH, or O-C₁-C₄ alkyl, the PGM comprising palladium;
providing a support material;
applying the complex to the support material to form a loaded support material;
disposing the loaded support material on a substrate; and
heating the loaded support material to form nanoparticles of the PGM on the support material.

2. The method of claim 1, wherein the PGM consists of palladium.

3. The method of claim 1 or claim 2, wherein the support material comprises alumina, preferably gamma-alumina.

4. The method of any preceding claim, wherein the support material comprises ceria-zirconia.

5. The method of claim 3 or claim 4, wherein the alumina and/or ceria-zirconia is doped.

6. The method of any preceding claim, wherein the loaded support material is disposed on the substrate in the form of a slurry.

7. The method of claim 6, wherein the slurry is prepared by a method comprising:
contacting a PGM salt and a compound of formula (I) in water to form the complex of a compound of formula (I) and a PGM in an aqueous solution, the PGM salt comprising palladium;
applying the complex to the support material to form a loaded support material by contacting the support material with the aqueous solution;
optionally adding one or more of an oxygen storage material, preferably ceria-zirconia; a promoter salt; a binder; an acid or a base; a thickening agent; and a reducing agent to the aqueous solution.

8. The method of claim 6, wherein the slurry is prepared by a method comprising:
contacting a support material and an aqueous solution of a PGM salt to form a slurry comprising a PGM-salt-loaded support material, the PGM salt comprising palladium;
applying the complex of a compound of formula (I): 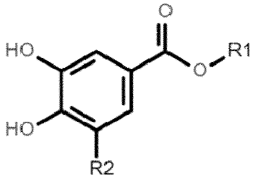 and a PGM to the support material to form a loaded support material by contacting the slurry comprising the PGM-salt-loaded support material and the compound of formula (I) in water;
optionally adding one or more of an oxygen storage material, preferably ceria-zirconia; a promoter salt; a binder; an acid or a base; a thickening agent; and a reducing agent to the aqueous solution or the slurry comprising the PGM-salt-loaded support material.

9. The method of any of claims 6 to 8, further comprising disposing a further slurry on the substrate, the further slurry comprising one or more of a further support material; an oxygen storage material; a promoter salt, preferably barium acetate, barium sulfate, barium citrate or a combination thereof; a binder; an acid or a base; a thickening agent; and a reducing agent, wherein disposing the further slurry on the substrate takes place before disposing the support material on the substrate and/or after heating the loaded support material to form nanoparticles of the PGM on the support material.

10. A catalyst article obtainable by the method of any preceding claim, the catalyst article for use in an emission treatment system.

11. The catalyst article of claim 10 for three-way catalysis.

12. The catalyst article of claim 10 or claim 11, wherein the substrate comprises a wall flow filter substrate.

13. The catalyst article of claim 10 or claim 11, wherein the substrate comprises a flow-through substrate.

14. The catalyst article of any of claims 10 to 13 comprising a bottom layer of support material having rhodium thereon and a top layer of support material having palladium thereon.

15. The catalyst article of any of claims 10 to 13 comprising a bottom layer of support material having palladium thereon and a top layer of support material having rhodium thereon.

16. The catalyst article of claim 14 or 15, wherein the top and/or bottom layer of support material also has platinum thereon.

17. The catalyst article of any of claims 14 to 16, wherein the top and/or bottom layer of support material has multiple PGMs thereon.

18. The catalyst article of any of claims 14 to 17 comprising two or more catalyst zones, wherein the two or more catalyst zones differ from each other by containing different PGMs or different amounts of PGMs.
